# DEMANDE DE BREVET EUROPEEN

(11) **EP 3 616 852 A1**
(43) Date de publication de la demande: **04.03.2020**
(21) Numéro de dépôt: 19190910.0
(22) Date de dépôt: 09.08.2019
(51) Int. Cl.: B25J 9/00, B25J 15/00, B25J 15/06

(54) **PRÉHENSEUR DE PIÈCES DE CARROSSERIE**

(30) Priorité: 30.08.2018 FR 1857808
(71) Demandeur: Compagnie Plastic Omnium, 69007 Lyon (FR)
(72) Inventeur: TRESSE, M. David, 01150 Sainte-Julie (FR)
(74) Mandataire: LLR

(57) **Abrégé**

L'invention concerne préhenseur (2) de pièces de carrosserie (20) de véhicule comprenant :
- un corps principal (4), et
- des extensions (12) en matière plastique s'étendant à partir du corps principal (4) et permettant la préhension d'une pièce de carrosserie (20),
chaque extension (12) comprenant une partie principale (13) et des moyens de connexion (14) de la partie principale (13) à au moins une ventouse (16) et à un dispositif d'aspiration d'air (18), la partie principale (13) et les moyens de connexion (14) étant réalisés d'un seul tenant.

## Description

L'invention concerne les préhenseurs de pièces de carrosserie de véhicule automobile.

Il s'agit de préhenseurs utilisés dans l'industrie automobile pour saisir (par l'intermédiaire de ventouses par exemple) et manipuler les pièces de carrosserie et ce dans différents but. On peut par exemple citer le placement et l'orientation des pièces de carrosserie devant des appareils de mesure fixes dans une optique de contrôle qualité des pièces avant livraison de ces dernières à un client.

Dans le cadre de ces contrôles, les appareils de mesure vont permettre de mesurer des paramètres liés au bon fonctionnement de dispositifs montés sur les pièces de carrosserie. On peut citer par exemple un pare-chocs équipé de capteurs de distances ou encore d'un dispositif de dégivrage.

On connaît des préhenseurs réalisés intégralement en métal. Cependant, la présence de parties métalliques dans les zones proches des pièces de carrosserie (ce qui est inévitable du fait que le préhenseur saisit la pièce de carrosserie) peut poser des problèmes au niveau des mesures effectuées dans le cadre du contrôle qualité. En effet, ces parties métalliques peuvent par exemple créer des interférences magnétiques ou électromagnétiques, lors du fonctionnement des dispositifs montés à proximité ou sur les pièces de carrosserie. On peut par exemple vouloir tester le comportement des ondes, en transmission ou en réflexion, dans l'environnement des pièces de carrosserie en question. A titre d'exemple, de telles ondes peuvent être des ondes dont la fréquence va de 3 jusqu'à 300 GHz, de 100 jusqu'à 384 THz ou encore de 384 à 789 THz.

De plus, certains tests, comme par exemple les tests de dispositif de dégivrage, peuvent conduire à un échauffement local des préhenseurs à proximité des pièces de carrosserie et au niveau des zones de contact avec ces dernières. Cet échauffement peut conduire à fausser les comportements thermiques des pièces à tester (par exemple par rayonnement ou conduction provenant des zones échauffées des préhenseurs), ceci conduisant alors à des performances erronées pendant les tests de ces dispositifs. Cet échauffement peut aussi conduire à l'apparition de déformations locales, ce qui peut poser problème dans le cas d'un préhenseur dont les zones citées ci-dessus sont composées de plusieurs pièces connectées les unes aux autres. En effet, la préhension par des ventouses par exemple est possible par la création d'un vide grâce à une connexion entre lesdites ventouses et un dispositif d'aspiration d'air. En cas de déformation des moyens de connexion, une perte d'étanchéité du système de création de vide peut conduire à une dégradation de la qualité de la préhension des pièces de carrosserie voire à une perte totale de la capacité de préhension.

L'invention a pour but de remédier à ces inconvénients ou fournissant un préhenseur de pièces de carrosserie de véhicule permettant un contrôle qualité optimal de ces dernières tout en assurant un bon fonctionnement du préhenseur lors de ses utilisations répétées.

A cet effet, l'invention a pour objet un préhenseur de pièces de carrosserie de véhicule comprenant :
- un corps principal, et
- des extensions en matière plastique s'étendant à partir du corps principal et permettant la préhension d'une pièce de carrosserie,
chaque extension comprenant une partie principale et des moyens de connexion de la partie principale à au moins une ventouse et à un dispositif d'aspiration d'air, la partie principale et les moyens de connexion étant réalisés d'un seul tenant.

Ainsi, on obtient un préhenseur dont les zones à proximité immédiate d'une pièce carrosserie et en contact avec cette dernière sont en matière plastique donc beaucoup moins gênantes que les parties métalliques de l'art antérieur en termes de qualité des mesures effectuées lors des différents contrôles qualité. De plus, le fait que les différents moyens de connexion des extensions aux ventouses et au dispositif d'aspiration d'air soient réalisés d'un seul tenant avec la partie principale des extensions permet de limiter le nombre de connexions et de pièces présentes à proximité des pièces de carrosserie et donc de limiter, en cas d'échauffement, les risques de voir apparaître des défauts d'étanchéité au niveau du système d'aspiration d'air permettant la préhension des pièces de carrosserie.

Le préhenseur selon l'invention peut en outre comprendre au moins une des caractéristiques suivantes :
- les extensions sont réalisées par fabrication additive ;
- les extensions s'étendent dans des directions différentes les unes des autres ;
- le corps principal comprend un tube principal et des tubes secondaires, les tubes secondaires comprenant des moyens de fixation amovibles des extensions ; et
- les tubes secondaires comprennent des rainures aptes à collaborer avec des extrémités de fixation présentes sur les extensions.

Nous allons maintenant présenter un mode de réalisation de l'invention donné à titre d'exemple non limitatif et à l'appui des figures annexées sur lesquelles :
- la figure 1 est une vue en perspective d'un préhenseur selon l'invention ;
- la figure 2 est une vue en perspective du préhenseur de la figure 1 sur lequel un pare-chocs avant est placé ;
- la figure 3 est un agrandissement du préhenseur de la figure 2 au niveau des extensions du préhenseur ;
- la figure 4 est une vue en perspective d'une extension selon l'invention ; et

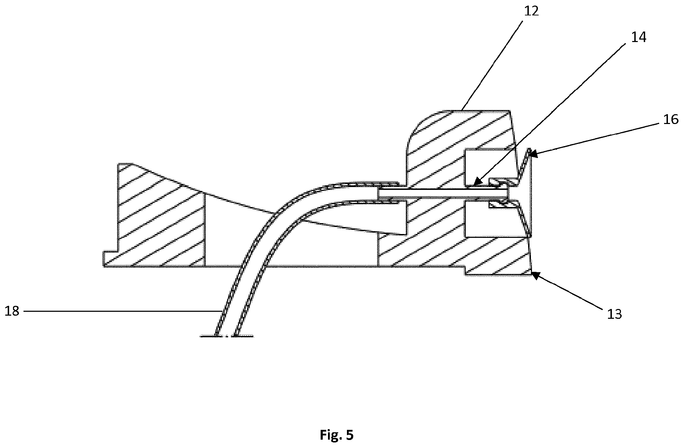

- la figure 5 est une vue en coupe d'une extension selon l'invention.

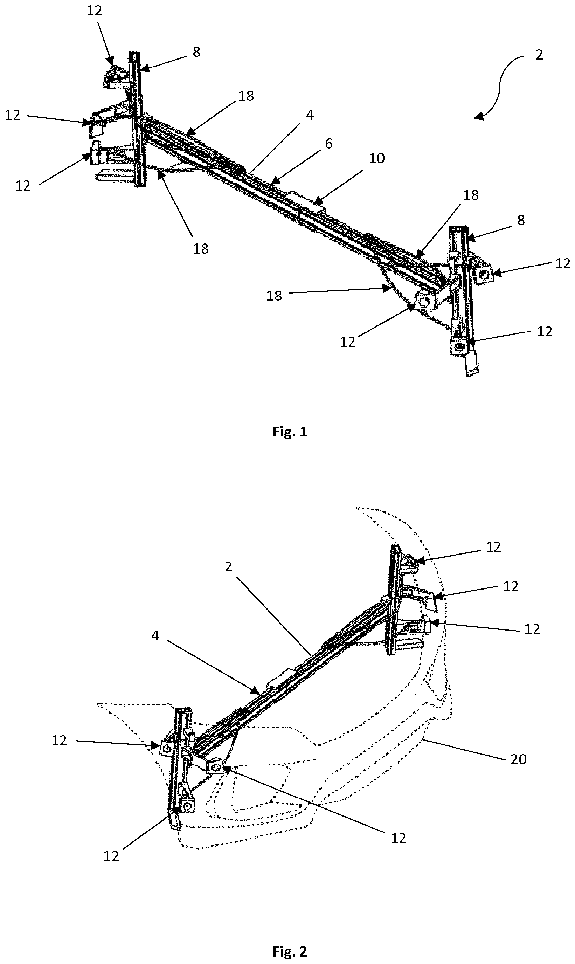

Nous nous intéressons désormais à la figure 1 qui représente un préhenseur 2 de pièces de carrosserie de véhicule automobile. Il comprend un corps principal 4 composé de plusieurs barres, par exemple plusieurs tubes métalliques rectilignes. Dans l'exemple illustré, le corps principal 4 est composé d'un tube principal 6 et deux tubes secondaires 8 perpendiculaires au tube principal 6 et s'étendant à partir des extrémités de ce dernier dans deux sens opposés à partir de ces extrémités. Le tube principal 6 comprend des moyens de raccordement 10 du préhenseur 2 à un dispositif permettant son maniement, par exemple un bras robotisé.

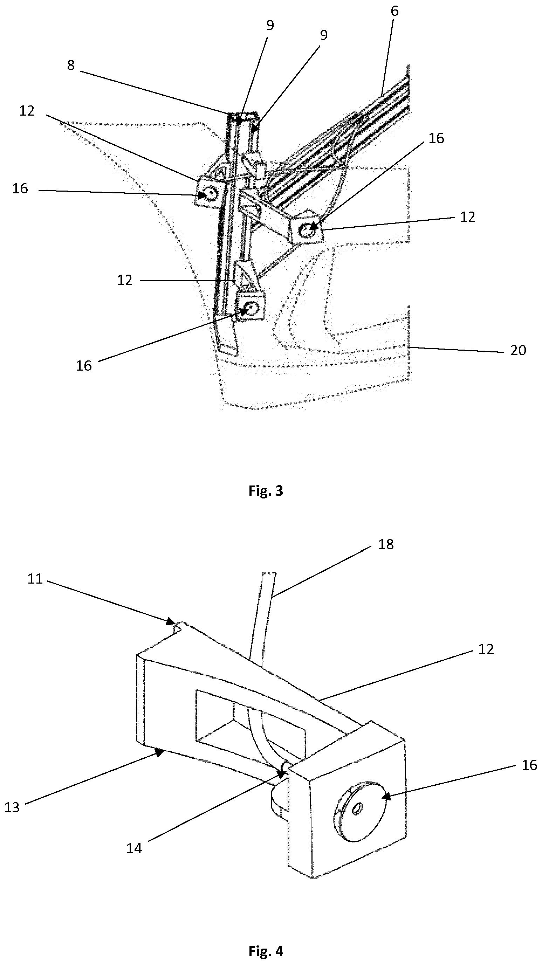

Chacun des tubes secondaires 8 est équipé d'au moins une extension 12 en matière plastique, de préférence réalisée par fabrication additive (communément appelée « impression 3D »). Les tubes secondaires 8 peuvent par exemple comprendre des rainures 9, comme cela est visible sur la figure 3, dans lesquelles des extrémités de fixation 11 présentes sur les extensions et complémentaires des rainures 9 sont insérées, par exemple en les glissant à l'intérieur des rainures 9. D'autres types de fixation, par exemple par clipsage, peuvent être envisagés. Une fixation amovible permet d'adapter le préhenseur 2 à la géométrie de la pièce de carrosserie à saisir et déplacer.

Chacune des extensions 12 comprend une partie principale 13 et des moyens de connexion 14 à au moins une ventouse 16 et à un dispositif d'aspiration d'air 18 du préhenseur 2. Chaque moyen de connexion 14 forme par conséquent un support de ventouse et un moyen de raccordement de la ventouse à un tube d'aspiration lui-même relié à un moyen d'aspiration d'air permettant d'aspirer l'air présent entre les ventouses 16 et une pièce de carrosserie en contact avec ces dernières et par conséquent de saisir ladite pièce de carrosserie. Les moyens de connexion 14 sont réalisés d'un seul tenant avec la partie principale 13 des extensions 12, la fabrication additive pouvant simplifier une telle réalisation.

Comme illustré sur les figures 1 à 3, tous les tubes d'aspiration reliés aux différentes ventouses 16 par l'intermédiaire des moyens de connexion 14 sont regroupés au niveau du tube principal 6 pour converger ensuite vers les moyens d'aspiration d'air comme par exemple une pompe à vide (non représentés). La connexion des tubes d'aspiration aux moyens d'aspiration peut s'effectuer au niveau des moyens de raccordement 10.

La partie principale 13 des extensions 12 peut en outre comprendre un évidement permettant le passage d'un tube d'aspiration.

Les extensions 12 peuvent s'étendre, comme cela est représenté sur les figures 1 et 2, dans des directions différentes les unes des autres afin de saisir des pièces de carrosserie au niveau de zones courbées de ces dernières. Cela est visible sur la figure 2 sur laquelle un pare-chocs avant 20 est représenté en pointillés. Les extensions 12 s'étendent dans des directions différentes afin d'assurer une préhension du pare-chocs avant 20 au niveau des retours latéraux de ce dernier.

L'invention n'est pas limitée aux modes de réalisation présentés et d'autres modes de réalisation apparaîtront clairement à l'homme du métier. Il est notamment possible de modifier la forme du corps principal du préhenseur ou encore le nombre, la forme et la disposition des extensions.

### Liste des références numériques

2 : préhenseur
4 : corps principal
6 : tube principal
8 : tubes secondaires
9 : rainures
10 : moyens de raccordement
11 : extrémités de fixation
12 : extensions
13 : partie principale des extrémités
14 : moyens de connexion
16 : ventouses
18 : dispositif d'aspiration d'air
20 : pare-chocs avant

## Revendications

1. Préhenseur (2) de pièces de carrosserie (20) de véhicule **caractérisé en ce qu'**il comprend :
- un corps principal (4), et
- des extensions (12) en matière plastique s'étendant à partir du corps principal (4) et permettant la préhension d'une pièce de carrosserie (20),
chaque extension (12) comprenant une partie principale (13) et des moyens de connexion (14) de la partie principale (13) à au moins une ventouse (16) et à un dispositif d'aspiration d'air (18), la partie principale (13) et les moyens de connexion (14) étant réalisés d'un seul tenant.

2. Préhenseur (2) selon la revendication 1, dans lequel les extensions (12) sont réalisées par fabrication additive.

3. Préhenseur (2) selon l'une quelconque des revendications précédentes, dans lequel les extensions (12) s'étendent dans des directions différentes les unes des autres.

4. Préhenseur (2) selon l'une quelconque des revendications précédentes, dans lequel le corps principal (4) comprend un tube principal (6) et des tubes secondaires (8), les tubes secondaires comprenant des moyens de fixation amovibles des extensions (12).

5. Préhenseur (2) selon la revendication précédente, dans lequel les tubes secondaires (8) comprennent des rainures (9) aptes à collaborer avec des extrémités de fixation (11) présentes sur les extensions (12).
